# FASCICULE DE BREVET EUROPEEN

(11) **EP 0 307 334 B1**
(45) Date de publication et mention de la délivrance du brevet: **19.01.1994**
(21) Numéro de dépôt: 88440073.0
(22) Date de dépôt: 06.09.1988
(51) Int. Cl.: A01B 49/02, A01B 33/08

(54) **Machine agricole de travail du sol comportant des socs et un rotor**
Bodenbearbeitungsmaschine mit Scharen und Rotor
Soil working machine comprising shares and a rotor

(30) Priorité: 09.09.1987 FR 8712581
(43) Date de publication de la demande: 15.03.1989
(73) Titulaire: KUHN S.A., F-67700 Saverne (FR)
(72) Inventeur: Deutschle, Karl, D-7906 Blaustein 1 (DE)

(56) Documents cités:
- DE-A- 3 424 250
- DE-A- 3 447 099
- FR-A- 2 550 909
- US-A- 3 698 485

## Description

La présente invention concerne une machine agricole de travail du sol destinée, au travail, à être déplacée dans une direction de travail, comportant un châssis supportant d'une part un rotor muni d'outils de travail du sol et entraîné en rotation autour de son axe longitudinal s'étendant au moins sensiblement horizontalement et transversalement à la direction de travail, par des moyens d'entraînement comportant notamment un carter central, ledit châssis supportant d'autre part des socs à l'aide de bras de soc et comprend deux premiers éléments de châssis s'étendant au moins sensiblement horizontalement, transversalement à la direction de travail et au moins sensiblement dans le prolongement l'un de l'autre, ledit carter central s'étendant entre ces deux premiers éléments de châssis en étant lié de manière démontable à ceux-ci au moyen d'organes de liaison, ledit châssis comprenant aussi un second élément de châssis s'étendant également au moins sensiblement horizontalement, transversalement à la direction de travail et de surcroît sensiblement verticalement au-dessus des deux premiers éléments de châssis en étant lié rigidement à chacun d'entre eux au moyen d'au moins deux points de liaison, ledit châssis comportant en sus deux points d'attelage inférieurs et un point d'attelage supérieur, le point d'attelage supérieur étant lié au second élément de châssis, tandis que chaque premier élément de châssis supporte un point d'attelage inférieur, lequel s'étend au moins sensiblement dans le voisinage d'un premier point de liaison respectif liant ledit premier élément de châssis au second élément de châssis.

Une telle machine agricole de travail du sol est décrite dans la DE-A-34 47 099 (figures 9, 10 et 11). Cette machine agricole de travail du sol connue comporte un châssis qui est constitué par deux premiers éléments de châssis s'étendant horizontalement et perpendiculairement à la direction d'avance au travail et dans le prolongement l'un de l'autre, et un second élément de châssis s'étendant parallèlement aux deux premiers éléments de châssis et verticalement au-dessus de ceux-ci. Ce second élément de châssis est lié rigidement par soudure à chacun des deux premiers éléments de châssis au niveau de deux points de liaison. Le châssis ainsi constitué, présente à chacune des extrémités extérieures des deux premiers éléments de châssis, une paroi latérale qui s'étend vers le bas. Entre les extrémités inférieures de ces deux parois latérales s'étend un rotor muni d'outils de travail du sol et entraîné autour de son axe longitudinal dirigé parallèlement aux deux premiers éléments de châssis. Le châssis supporte par ailleurs deux points d'attelage inférieurs et un point d'attelage supérieur. Le point d'attelage supérieur est lié rigidement par soudure au second élément de châssis, tandis que chaque premier élément de châssis supporte un point d'attelage inférieur. Ce dernier est lié rigidement par soudure au premier élément de châssis respectif au niveau du point de liaison correspondant situé le plus à l'extérieur. Au niveau de son extrémité intérieure, chaque premier élément de châssis est muni d'un flasque plan qui y est soudé. Ce flasque est par ailleurs soudé au second élément de châssis et constitue ainsi le deuxième point de liaison où ce premier élément de châssis est lié au second élément de châssis. L'entraînement en rotation du rotor est réalisé par des moyens d'entraînement comportant un carter central qui s'étend entre les deux premiers éléments de châssis auxquels il est lié, un arbre d'entraînement logé à l'intérieur de l'un des premiers éléments de châssis et un carter latéral constituant l'une des parois latérales. Le carter central est lié rigidement, mais de manière démontable au flasque soudé à l'extrémité intérieure du premier élément de châssis qui contient l'arbre d'entraînement. Il n'est par contre lié à l'autre premier élément de châssis qu'au moyen d'un centrage.

Cette machine agricole de travail du sol connue comporte un grand inconvénient. Celui-ci réside dans le fait que les deux premiers éléments de châssis et le second élément de châssis sont liés définitivement entre eux par soudure. De ce fait, le montage des moyens d'entraînement du rotor, qui s'étendent en partie à l'intérieur de l'un des deux premiers éléments de châssis, est très difficile. En effet, compte tenu du volume et du poids du châssis, il est quasiment impossible d'usiner après soudure des portées de roulement dans le premier élément de châssis qui doit contenir l'arbre d'entraînement faisant partie des moyens d'entraînement du rotor. Il est ensuite aussi très difficile de monter et de régler correctement le jeu de fonctionnement du couple conique de sortie contenu dans le carter central et transmettant le mouvement audit arbre d'entraînement. Comme dit plus haut, le carter central est lié rigidement au premier élément de châssis contenant l'arbre d'entraînement, alors qu'il n'est lié qu'au moyen d'un centrage à l'autre premier élément de châssis. Pour garantir un montage à peu près correct des moyens d'entraînement, il faut donc que la face des flasques d'extrémité du premier élément de châssis contenant l'arbre d'entraînement et la face du flasque d'extrémité de l'autre premier élément de châssis devant recevoir le centrage du carter central, soient orthogonales à l'axe longitudinal de leur premier élément de châssis correspondant. De surcroît, les axes longitudinaux des premiers éléments de châssis doivent être parfaitement confondus. Ceci nécessite donc une opération de redressage du châssis après soudure qui est extrêmement fastidieuse et onéreuse et qui n'est pas compatible avec une fabrication en série.

Le redressage doit par ailleurs également être fait de telle manière que le rotor puisse être correctement monté sur le châssis.

Dans la FR-A-2 550 909 est décrite une machine agricole pour travailler le sol, qui comporte une pluralité d'organes de travail entraînés autour d'axes dirigés vers le haut. Ces organes de travail sont guidés en rotation dans une partie de châssis en forme de caisson d'un seul tenant, qui s'étend transversalement au sens de l'avancement. Près du milieu de la face supérieure de la partie de châssis en forme de caisson, sont disposés des moyens d'attelage qui comportent un chevalet muni de points d'accrochage formant une fixation à trois points pour l'accouplement de la machine au dispositif de levage à trois points d'un tracteur. Le chevalet comprend une barre tubulaire carrée, sensiblement horizontale, qui s'étend transversalement au sens de l'avancement. La longueur de cette barre correspond sensiblement à l'écartement entre les points d'accrochage inférieurs de la fixation à trois points. Ladite barre est reliée à la face supérieure du caisson à l'aide de supports réalisés en tôle profilée, qui sont vissés d'une part sur la barre et d'autre part sur la face supérieure du caisson. A la base de chaque support, sont prévus des profilés formant un fourreau dans lequel est monté un bras qui s'étend dans le sens de l'avancement et qui forme un point d'accrochage inférieur. Près de son milieu, la barre est munie de deux plaques profilées fixées à quelque distance l'une de l'autre et munies de trous respectifs. Ces deux plaques profilées forment le point d'accrochage supérieur. Juste au milieu de la hauteur de chaque support est fixée l'extrémité d'un longeron, dont l'autre extrémité est fixée à l'extrémité extérieure correspondante du caisson. Près du milieu du caisson et sur la face supérieure de celui-ci est fixée une boîte d'engrenages destinée à l'entraînement en rotation des organes de travail.

Le but de la présente invention est de créer une machine agricole de travail du sol, telle que celle décrite dans le préambule de la revendication 1, qui comporte un châssis d'une très grande rigidité et d'une fabrication aisée et peu onéreuse, mais qui ne possède pas les inconvénients du châssis de la machine décrite dans la DE-A-34 47 099.

A cet effet, la machine agricole de travail du sol selon l'invention, telle que décrite dans le préambule de la revendication 1, est caractérisée par le fait :
- que pour chaque premier élément de châssis, il est prévu au moins un deuxième point de liaison liant ledit premier élément de châssis au second élément de châssis, et situé, vers l'extérieur, au-delà dudit premier point de liaison (agencé dans le voisinage d'un point d'attelage inférieur),
- que lesdits points de liaison comportent des éléments de liaison comportant notamment des vis d'assemblage liant de manière démontable le second élément de châssis aux deux premiers éléments de châssis,
- qu'au moins au deuxième point de liaison de chaque premier élément de châssis, situé le plus à l'extérieur, il est prévu des organes compensateurs des tolérances de fabrication des différents éléments de châssis, qui comportent une équerre dont la première face de l'angle droit est en contact avec une face correspondante du premier élément de châssis et dont la deuxième face de l'angle droit est en contact avec une face correspondante du second élément de châssis,
- que dans les faces de contact entre l'équerre et le premier élément de châssis et dans les faces de contact entre l'équerre et le second élément de châssis, il est prévu des trous de passage pour les vis d'assemblage liant lesdites faces correspondantes entre elles, et
- que le diamètre des trous de passage prévus dans les faces de contact entre l'équerre et le premier élément de châssis et/ou des trous de passage prévus dans les faces de contact entre l'équerre et le second élément de châssis est relativement plus grand que le diamètre des vis d'assemblage correspondantes.

Grâce à la première caractéristique partielle, le châssis de la machine agricole de travail du sol selon l'invention présente une très grande rigidité, car l'écartement entre les deux deuxièmes points de liaison extérieurs liant les deux premiers éléments de châssis au second élément de châssis est relativement important. Un tel châssis est donc particulièrement bien adapté aux machines agricoles de travail du sol du type de celle décrite dans le préambule de la revendication 1, car ledit châssis est apte à bien encaisser les efforts substantiels engendrés durant le travail, mais également durant le transport.

Selon la deuxième caractéristique partielle, le châssis est formé par des éléments de châssis distincts qui sont ensuite assemblés rigidement entre eux, mais de manière démontable. Chacun de ces éléments de châssis possède un volume et un poids raisonnable, de sorte que sa fabrication, sa manutention et son stockage avant montage ou en tant que pièce de rechange sont relativement aisés. Du reste, il devient aussi possible de faire des usinages après soudure, de telle sorte que les tolérances de soudure peuvent être relativement larges. Grâce à ces usinages, le montage du carter central et le réglage du couple conique de sortie transmettant le mouvement du carter central à l'arbre d'entraînement logé dans l'un des premiers éléments de châssis, sont très aisés.

Selon la troisième caractéristique partielle, il est prévu, au moins au deuxième point de liaison de chaque premier élément de châssis situé le plus à l'extérieur, des organes compensateurs des tolérances de fabrication des différents éléments de châssis. Ces organes comportent une équerre dont la première face de l'angle droit est en contact avec une face correspondante du premier élément de châssis et dont la deuxième face de l'angle droit est en contact avec une face correspondante du second élément de châssis. Dans les premières faces de contact entre l'équerre et le premier élément de châssis et dans les deuxièmes faces de contact entre l'équerre et le second élément de châssis, il est prévu des trous de passage pour les vis d'assemblage liant lesdites faces correspondantes entre elles. Le diamètre des trous de passage prévus dans les faces de contact entre l'équerre et le premier élément de châssis et/ou des trous de passage prévus dans les faces de contact entre l'équerre et le second élément de châssis est relativement plus grand que le diamètre des vis d'assemblage correspondantes. Il est ainsi possible de fabriquer les différents éléments de châssis sans qu'il soit forcément nécessaire d'usiner les parties desdits éléments de châssis destinées à venir en contact l'une avec l'autre lors du montage. Le prix de revient du châssis peut ainsi être diminué davantage et le second élément de châssis peut être monté sur les deux premiers éléments de châssis sans introduire de contraintes initiales dans ledit châssis.

Les avantages qui apparaissent au cours du montage, sont bien entendu également très appréciables pendant le démontage et le remontage ultérieurs lors d'une éventuelle intervention.

Selon une caractéristique supplémentaire de l'invention, le carter central est lié rigidement aux premiers éléments de châssis au moyen desdits organes de liaison. Le carter central participe ainsi à la rigidité du châssis.

D'autres caractéristiques de l'invention apparaîtront dans les autres sous-revendications, ainsi que dans la description ci-dessous d'un exemple de réalisation non limitatif de l'invention, se référant au dessin annexé sur lequel :
- la figure 1 représente une vue latérale d'une machine agricole de travail du sol selon l'invention,
- la figure 2 représente une vue suivant la flèche II du châssis de la machine agricole de travail du sol de la figure 1,
- la figure 3 représente une vue en coupe du premier élément de châssis contenant une partie des moyens d'entraînement du rotor,
- la figure 4 représente une vue en coupe suivant le plan IV-IV du châssis de la figure 2,
- la figure 5 représente une vue en coupe suivant le plan étagé V-V du châssis de la figure 2,
- la figure 6 représente une vue partielle en coupe suivant le plan VI-VI défini sur la figure 4, et
- la figure 7 représente une vue partielle en coupe suivant le plan VII-VII défini sur la figure 5.

La machine de travail du sol (1) selon l'invention représentée sur les figures comporte un châssis (2) qui supporte entre autres des socs (3) et un rotor (4) muni d'outils (5) destinés à affiner le sol. A cet effet, chaque soc (3) est muni d'un bras de soc (6) qui est logé dans une chape correspondante (7) aménagée sur le châssis (2) de manière à ce que la hauteur relative du soc (3) par rapport au rotor (4) puisse être réglée. Le rotor (4) quant à lui est supporté par le châssis (2) au moyen de deux parois latérales (9, 10) dont l'une est liée à l'une des extrémités du châssis (2) et dont l'autre est liée à l'autre des extrémités du châssis (2).

Le châssis (2) comporte par ailleurs des points d'attelage inférieur (11) et supérieur (12) permettant de lier la machine agricole de travail du sol (1) au système à trois points (13) d'un tracteur agricole (14) dont on n'a représenté que partiellement le système d'attelage à trois points.

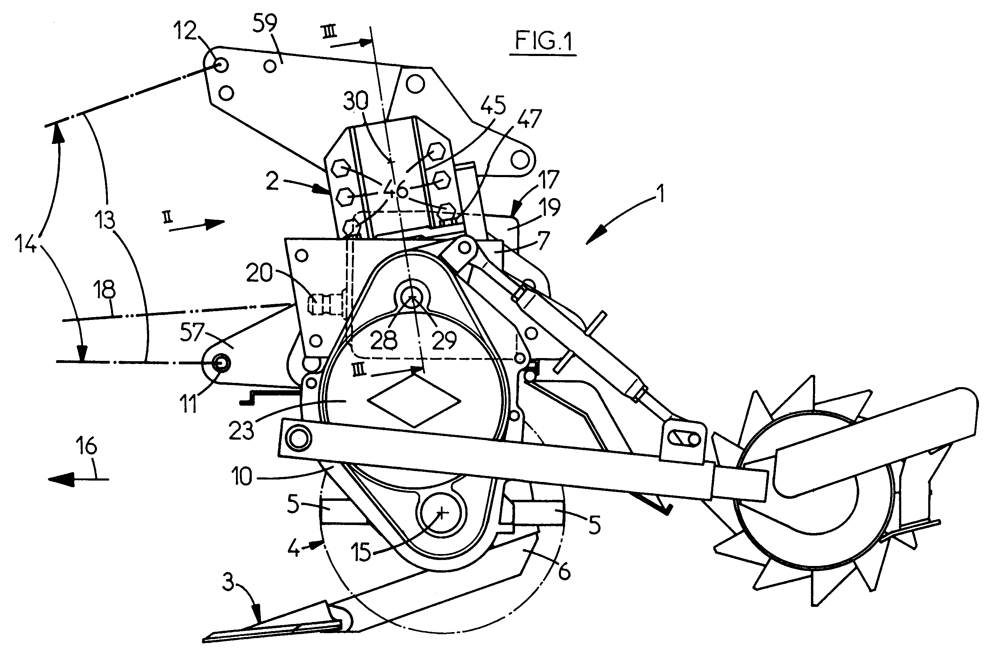

Le rotor (4) est entraîné en rotation autour de son axe longitudinal (15) qui s'étend transversalement à la direction de travail (16), par des moyens d'entraînement (17) recevant eux-mêmes le mouvement de l'arbre de prise de force (non représenté) du tracteur agricole (14) à l'aide d'un arbre de transmission à joints universels (18) schématiquement représenté sur la figure 1. Les moyens d'entraînement (17) sont connus de l'homme de l'art et comportent notamment un carter central (19). Le carter central (19) est un carter de renvoi qui pourra avantageusement être constitué sous forme de boîte de vitesse. Il comporte d'une part un arbre d'entrée (20) et d'autre part un couple conique de sortie dont seule la roue (21) a été représentée. Ce couple conique de sortie transmet le mouvement à un arbre d'entraînement (22) qui transmet lui-même le mouvement à un carter latéral (23) constituant l'une (10) des parois latérales (9, 10) montées sur le châssis (2). Le carter latéral (23) comporte des organes d'entraînement transmettant le mouvement au rotor (4) et constitués par exemple sous forme de roues dentées dont seule la roue dentée d'entrée (24) a été représentée.

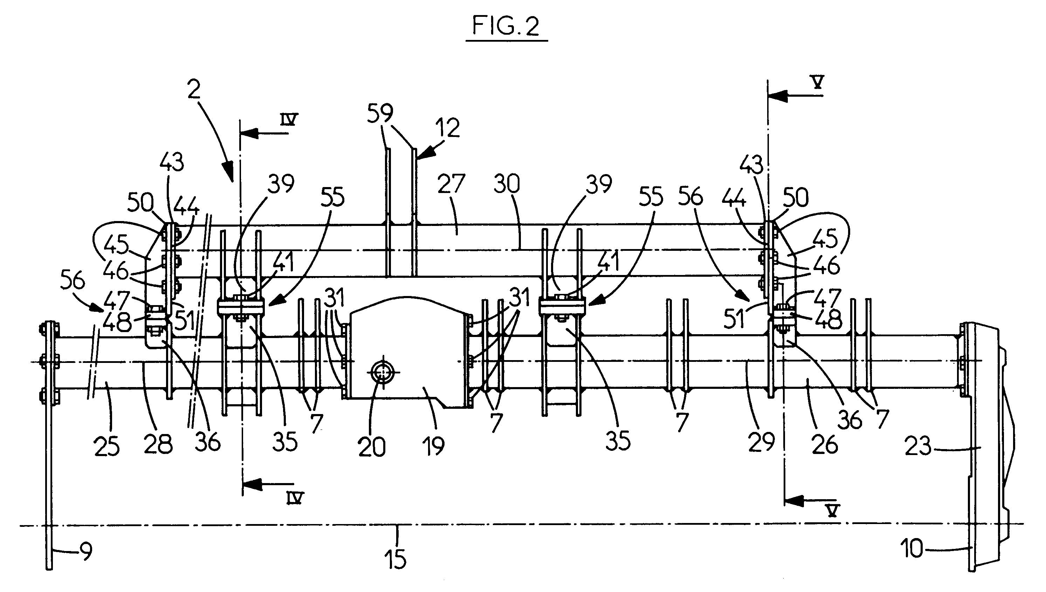

Le châssis (2) de la machine agricole de travail du sol (1) selon l'invention comporte deux premiers éléments de châssis (25, 26) et un second élément de châssis (27). Ces trois éléments de châssis (25, 26, 27) ont une forme tubulaire et leur axe longitudinal respectif (28, 29, 30) s'étend sensiblement parallèlement à l'axe longitudinal (15) du rotor (4). En plus, on voit sur les figures 1 et 2 que les axes longitudinaux (28, 29) des premiers éléments de châssis (25, 26) s'étendent dans le prolongement l'un de l'autre, tandis que l'axe longitudinal (30) du second élément de châssis (27) s'étend sensiblement verticalement au-dessus des axes longitudinaux (28, 29). On voit également sur la figure 2 que l'un (25) des deux premiers éléments de châssis (25, 26) s'étend d'un côté du carter central (19) tandis que l'autre (26) desdits premiers éléments de châssis (25, 26) s'étend de l'autre côté dudit carter central (19). Ces deux premiers éléments de châssis (25, 26) sont liés rigidement mais de manière démontable au carter central (19) au moyen de vis d'assemblage (31).

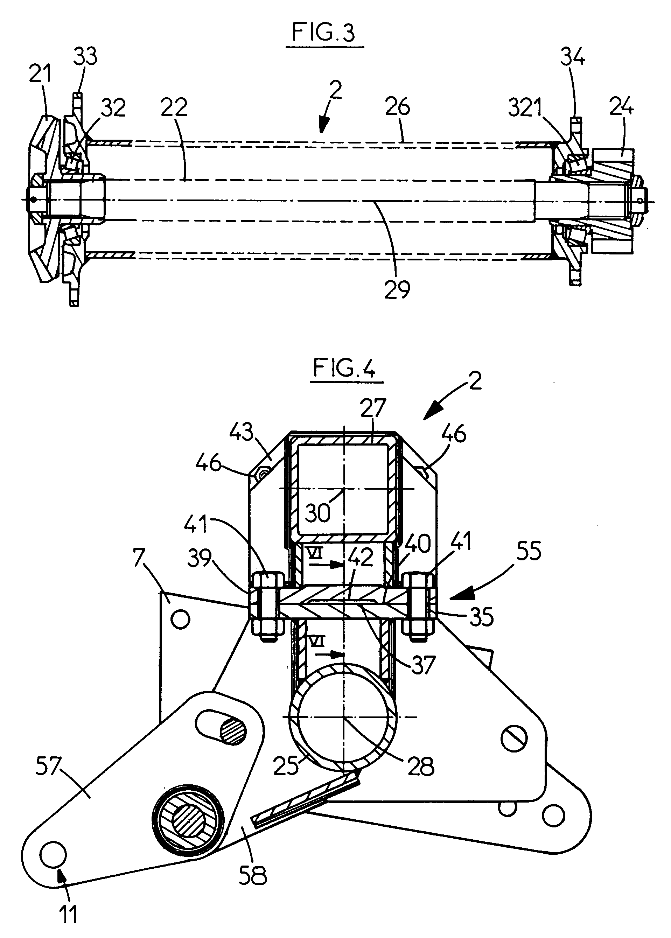

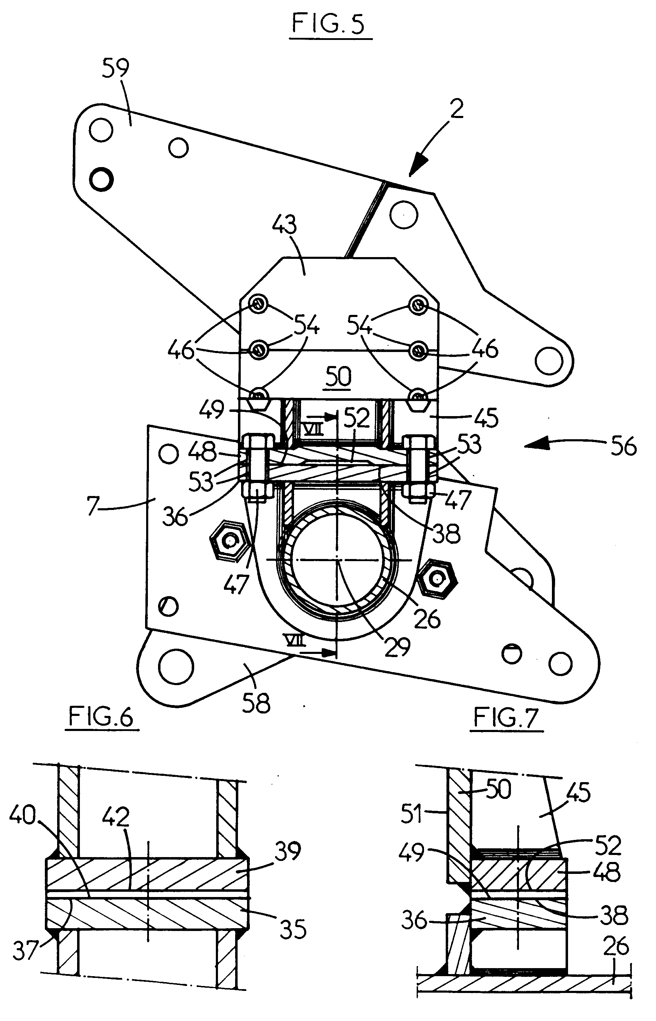

A l'intérieur du premier élément de châssis (26) s'étendant entre le carter central (19) et le carter latéral (23), est agencé, comme dit plus haut, l'arbre d'entraînement (22) qui y est guidé en rotation et maintenu en translation au moyen de deux paliers à roulement (32, 321). Ces paliers à roulements (32, 321) sont montés dans des portées aménagées dans les flasques d'extrémité (33, 34) dudit premier élément de châssis (26). Chacun des deux premiers éléments de châssis (25, 26) est en plus muni de deux brides de liaison (35, 36) présentant chacune une face (37, 38) sensiblement horizontale. Le second élément de châssis (27) quant à lui est également muni de deux brides de liaison (39) présentant chacune une face (40) sensiblement horizontale. L'une de ces brides de liaison (39) est destinée à être liée à la bride de liaison (35) de l'un (25) des deux premiers éléments de châssis (25, 26) tandis que l'autre de ces brides de liaison (39) est destinée à être liée à la bride de liaison (35) de l'autre (26) des deux premiers éléments de châssis (25, 26). La liaison entre les brides de liaison (35, 39) respectives est réalisée par des vis d'assemblage (41). On voit par ailleurs sur les figures 4 et 6 que la face (40) de la bride de liaison (39) comporte dans sa partie médiane un décrochement (42) de telle sorte que dans cette partie médiane la face (40) ne soit pas en contact avec la face (37) de la bride de liaison (35) correspondante. Ceci garantit un meilleur contact entre les deux faces (37 et 40) lorsque celles-ci sont brutes.

A chaque extrémité, le second élément de châssis (27) comporte dans le voisinage de la bride de liaison (36) du premier élément de châssis (25, 26) correspondant un flasque de liaison (43) qui présente une face (44) sensiblement verticale. Chaque flasque de liaison (43) est lié à la bride de liaison respective (36) des premiers éléments de châssis (25, 26) au moyen d'une équerre (45) et de vis d'assemblage (46, 47). Cette équerre (45) comporte une première bride de liaison (48) présentant une face (49) sensiblement horizontale et une deuxième bride de liaison (50) présentant une face (51) sensiblement verticale. Les faces (49 et 51) forment entre elles un angle droit. La face (49) de la première bride de liaison (48) est destinée à venir en contact avec la face (38) de la bride de liaison (36) du premier élément de châssis (25, 26) correspondant, tandis que la face (51) de la deuxième bride de liaison (50) est destinée à venir en contact avec la face (44) du flasque de liaison (43) correspondant du second élément de châssis (27).

Sur les figures 5 et 7 on voit encore que la face (49) de la première bride de liaison (48) de l'équerre (45) comporte dans sa partie médiane un décrochement (52) de telle sorte que dans cette partie médiane la face (49) ne soit par en contact avec la face (38) de la bride de liaison (36) correspondante. Ceci garantit un meilleur contact entre les deux faces (49, 38) lorsque celles-ci sont brutes.

Comme dit plus haut, chaque équerre (45) est liée d'une part au flasque de liaison (43) au moyen de vis d'assemblage (46) et d'autre part à la bride de liaison (36) au moyen de vis d'assemblage (47). A cet effet, la première bride de liaison (48) de l'équerre (45) et la bride de liaison (36) du premier élément de châssis (25, 26) correspondant, de même que la deuxième bride de liaison (50) de l'équerre (45) et le flasque de liaison (43) du second élément de châssis (27) comportent des trous (53, 54). Comme visible sur la figure 5, le diamètre de ces trous (53, 54) est relativement plus grand que le diamètre des vis d'assemblage (47, 46) qui les traversent. L'équerre (45) et les trous (53, 54) de passage des vis d'assemblage (47, 46) constituent ainsi des organes compensateurs des tolérances de fabrication des différents éléments de châssis (25, 26, 27).

Le second élément de châssis (27) est donc lié à chaque premier élément de châssis (25, 26) au moyen de deux points de liaison, un premier point de liaison (55) défini par les brides de liaison (35, 39) et un deuxième point de liaison (56) défini par la bride de liaison (36), le flasque de liaison (43) et l'équerre (45). Sur la figure 2, on voit que le deuxième point de liaison (56) du second élément de châssis (27) avec le premier élément de châssis (25, 26) correspondant est situé entre la dernière (c'est-à-dire extérieure) et l'avant dernière chape (7) destinées à recevoir un bras de soc (6). En sus, le carter central (19) que est lié rigidement aux premiers éléments de châssis (25, 26), participe à la rigidité du châssis (2).

On voit enfin encore que chaque point d'attelage inférieur (11) est constitué par un tenon pivotant (57) (figures 1 et 4) lié à une chape (58) faisant partie de la bride de liaison (35) du premier élément de châssis (25, 26) correspondant.

Au transport, le poids de la machine est donc bien absorbé par les divers éléments de châssis (25, 26, 27). Le point d'attelage supérieur (12) quant à lui est constitué par une chape (59) soudée au second élément de châssis (27).

Avec une telle construction, le châssis (2) comporte une rigidité maximale lui permettant de bien encaisser les efforts substantiels s'exerçant notamment sur les socs (3) et les bras de soc (6) pendant le travail.

Par ailleurs, avec cette construction, le châssis (2) est aisément réalisable et stockable puisque les différents éléments de châssis (25, 26, 27) et le carter central (19) ont des dimensions relativement réduites. Il est notamment possible d'usiner après soudure les flasques d'extrémité des premiers éléments de châssis (25, 26) ce qui permet de garantir un positionnement correct des parois latérales (9, 10) destinées à supporter le rotor (4) de même qu'une liaison optimale avec le carter central (19). Enfin, le montage du carter central (19) est également amélioré et simplifié.

Le montage du châssis (2) de la machine de travail du sol (1) selon l'invention s'opère de la manière suivante.

On commence par prémonter le premier élément de châssis (26) s'étendant entre le carter central (19) et le carter latéral (23) conformément à la figure 3. On lie ensuite le premier élément de châssis (25) et le premier élément de châssis (26) prémonté sur le carter central (19) sans toutefois bloquer les vis d'assemblage (31). On lie alors le second élément de châssis (27) au montage précédent au niveau des premiers points de liaison (55) à l'aide des vis d'assemblage (41). Comme les vis d'assemblage (31) liant les premiers éléments de châssis (25, 26) au carter central (19) ne sont pas bloquées, lesdits premiers éléments de châssis (25, 26) peuvent en cas de nécessité légèrement tourner autour de leur axe longitudinal respectif (28, 29) jusqu'à ce que les faces (37, 40) des brides de liaison (35, 39) respectives soient en contact l'une avec l'autre. On bloque alors les vis d'assemblage (41 et 31). Il suffit ensuite de venir lier les équerres (45) entre les flasques de liaison (43) du second élément de châssis (27) et la bride de liaison (36) correspondante des premiers éléments de châssis (25, 26) au moyen des vis d'assemblage (46, 47). On notera que ce montage est toujours possible dans la limite des tolérances de soudure classiques étant donné que les trous (53, 54) de passage des vis d'assemblage (47, 46) ont un diamètre relativement plus grand que le diamètre desdites vis d'assemblage (47, 46).

On pourra apporter différentes modifications ou améliorations à l'exemple de réalisation décrit sans sortir pour autant du cadre de la présente invention tel que définit dans les revendications ci-après.

## Revendications

1. Machine agricole de travail du sol (1) destinée, au travail, à être déplacée dans une direction de travail (16), comportant un châssis (2) supportant d'une part un rotor (4) muni d'outils de travail du sol (5) et entraîné en rotation autour de son axe longitudinal (15) s'étendant au moins sensiblement horizontalement et transversalement à la direction de travail (16), par des moyens d'entraînement (17) comportant notamment un carter central (19), ledit châssis (2) supportant d'autre part des socs (3) à l'aide de bras de soc (6) et comprend deux premiers éléments de châssis (25, 26) s'étendant au moins sensiblement horizontalement, transversalement à la direction de travail (16) et au moins sensiblement dans le prolongement l'un de l'autre, ledit carter central (19) s'étendant entre ces deux premiers éléments de châssis (25, 26) en étant lié de manière démontable à ceux-ci au moyen d'organes de liaison (31), ledit châssis (2) comprenant aussi un second élément de châssis (27) s'étendant également au moins sensiblement horizontalement, transversalement à la direction de travail (16) et de surcroît sensiblement verticalement au-dessus des deux premiers éléments de châssis (25, 26) en étant lié rigidement à chacun d'entre eux au moyen d'au moins deux points de liaison (55, 56), ledit châssis (2) comportant en sus deux points d'attelage inférieurs (11) et un point d'attelage supérieur (12), le point d'attelage supérieur (12) étant lié au second élément de châssis (27), tandis que chaque premier élément de châssis (25, 26) supporte un point d'attelage inférieur (11) lequel s'étend au moins sensiblement dans le voisinage d'un premier point de liaison (55) respectif liant ledit premier élément de châssis (25, 26) au second élément de châssis (27), caractérisée par le fait que pour chaque premier élément de châssis (25, 26), il est prévu au moins un deuxième point de liaison (56) liant ledit premier élément de châssis (25, 26) au second élément de châssis (27) et situé, vers l'extérieur, au-delà dudit premier point de liaison (55), que lesdits points de liaison (55, 56) comportent des éléments de liaison (41, 45, 46, 47) comportant notamment des vis d'assemblage (41, 47, 46) liant de manière démontable le second élément de châssis (27) aux deux premiers éléments de châssis (25, 26), qu'au moins au deuxième point de liaison (56) de chaque premier élément de châssis (25, 26) situé le plus à l'extérieur, il est prévu des organes (45, 53, 54) compensateurs des tolérances de fabrication des différents éléments de châssis (25, 26, 27), qui comportent une équerre (45) dont la première face (49) de l'angle droit est en contact avec une face (38) correspondante du premier élément de châssis (25, 26) et dont la deuxième face (51) de l'angle droit est en contact avec une face (44) correspondante du second élément de châssis (27), que dans les faces (38, 49) de contact entre l'équerre (45) et le premier élément de châssis (25, 26) et dans les faces (44, 51) de contact entre l'équerre (45) et le second élément de châssis (27), il est prévu des trous de passage (53 ; 54) pour les vis d'assemblage (47 ; 46) liant lesdites faces (38, 49 ; 44, 51) correspondantes entre elles, et que le diamètre des trous de passage (53) prévus dans les faces (38, 49) de contact entre l'équerre (45) et le premier élément de châssis (25, 26) et/ou des trous de passage (54) prévus dans les faces (44, 51) de contact entre l'équerre (45) et le second élément de châssis (27) est relativement plus grand que le diamètre des vis d'assemblage (47, 46) correspondantes.

2. Machine de travail du sol selon la revendication 1, caractérisée par le fait que le carter central (19) est lié rigidement aux deux premiers éléments de châssis (25, 26) au moyen desdits organes de liaison (31).

3. Machine agricole de travail du sol selon la revendication 1 ou 2, caractérisée par le fait qu'au moins au niveau du premier point de liaison (55), les premiers éléments de châssis (25, 26) et le second élément de châssis (27) comportent chacun des faces (37, 40) qui sont en contact direct l'une avec l'autre et qui sont liées entre elles au moyen de vis d'assemblage (41).

4. Machine agricole de travail du sol selon la revendication 3, caractérisée par le fait que l'une au moins desdites faces (37, 40) dudit premier point de liaison (55) comporte, dans sa partie médiane, un décrochement (42) de sorte à ne pas être en contact avec l'autre face dans ladite partie médiane.

5. Machine agricole de travail du sol selon la revendication 3 ou 4, caractérisée par le fait que lesdites faces (37, 40) s'étendent sensiblement horizontalement.

6. Machine agricole de travail du sol selon l'une au moins des revendications précédentes, caractérisée par le fait que la première face, (49) de l'angle droit de l'équerre (45) s'étend sensiblement horizontalement et que la deuxième face (51) de l'angle droit de l'équerre (45) s'étend sensiblement verticalement.

7. Machine agricole de travail du sol selon la revendication 6, caractérisée par le fait que la face (38) destinée à venir en contact avec la première face (49) sensiblement horizontale de l'équerre (45) est agencée sur le premier élément de châssis (25, 26) correspondant, et que la face (44) destinée à venir en contact avec la deuxième face (51) sensiblement verticale de l'équerre (45) est agencée sur le second élément de châssis (27).

8. Machine agricole de travail du sol selon la revendication 6 ou 7, caractérisée par le fait que la première face (49) sensiblement horizontale de l'équerre (45) et/ou la face (38) correspondante avec laquelle elle est destinée à venir en contact, comporte(nt) dans sa (leur) partie médiane un décrochement (52), de sorte à ce que lesdites faces (49, 38) ne soient pas en contact au niveau de leur partie médiane.

9. Machine agricole de travail du sol selon l'une au moins des revendications précédentes, caractérisée par le fait que pour chaque premier élément de châssis (25, 26), le deuxième point de liaison (56) le plus à l'extérieur, s'étend entre les zones de liaison des deux socs (3) implantés le plus à l'extérieur sur ledit premier élément de châssis (25, 26).

## Claims

1. An agricultural machine for working the soil (1) intended to be moved, during work, in a direction of working (16), comprising a frame (2) supporting on the one hand a rotor (4) equipped with tools for working the soil (5) and driven in rotation about its longitudinal axis (15) extending at least approximately horizontally and transversely to the direction of work (16), by drive means (17) comprising particularly a central housing (19), the said frame (2) supporting on the other hand shares (3) by means of share arms (6) and comprising two first frame elements (25, 26) extending at least approximately horizontally, transversely to the direction of work (16) and the one at least approximately in the extension from the other, the said central housing (19) extending between these two first frame elements (25,26) in being connected to them, in such a way that it may be dismantled, by means of connecting elements (31), the said frame (2) comprising also a second frame element (27) also extending at least approximately horizontally, transversely to the direction of work (16) and moreover approximately vertically above the two first frame elements (25, 26) in being connected rigidly to each one of them by means of at least two connecting points (55, 56), the said frame (2) comprising in addition two lower hitching points (11) and one upper hitching point (12), the upper hitching point (12) being connected to the second frame element (27), while each first frame element (25, 26) bears a lower hitching point (11) which extends at least approximately in the vicinity of a respective first connecting point (55) connecting the said first frame element (25, 26) to the second frame element (27), characterised in that for each first frame element (25, 26), there is provided at least one second connecting point (56) connecting the said first frame element (25, 26) to the second frame element (27) and situated, towards the outside, beyond the said first connecting point (55), in that the said connecting points (55, 56) comprise connecting elements (41, 45, 46, 47) comprising in particular assembly screws (41, 47, 46) connecting the second frame element (27) to the two first frame elements (25, 26) in such a way that they may be dismantled, in that at least at the outermost second connecting point (56) of each first frame element (25, 26), are provided devices (45, 53, 54) to compensate for the manufacturing tolerances of the different frame elements (25, 26, 27), which comprise an angle bracket (45) of which the first face (49) of the right angle is in contact with a corresponding face (38) of the first frame element (25, 26) and of which the second face (51) of the right angle is in contact with a corresponding face (44) of the second frame element (27), in that in the contact faces (38, 49) between the angle bracket (45) and the first frame element (25, 26) and in the contact faces (44, 51) between the angle bracket (45) and the second frame element (27), there are provided holes (53; 54) for the assembly screws (47; 46) connecting the said corresponding faces (38, 49; 44, 51) together, and in that the diameter of the holes (53) provided in the contact faces (38, 49) between the angle bracket (45) and the first frame element (25, 26) and/or the holes (54) provided in the contact faces (44, 51) between the angle bracket (45) and the second frame element (27) is relatively larger than the diameter of the corresponding assembly screws (47, 46).

2. An agricultural machine for working the soil in accordance with claim 1, characterised in that the central housing (19) is rigidly connected to the two first frame elements (25, 26) by means of the said connecting elements (31).

3. An agricultural machine for working the soil in accordance with claim 1 or 2, characterised in that at least at the level of the first connecting point (55), the first frame elements (25, 26) and the second frame element (27) each have faces (37, 40) which are in direct contact with one another and which are connected together by means of assembly screws (41).

4. An agricultural machine for working the soil in accordance with claim 3, characterised in that one at least of the said faces (37, 40) of the said first connecting point (55) has, in its central part, a recess (42) so as not to come into contact with the other face in the said central part.

5. An agricultural machine for working the soil in accordance with claim 3 or 4, characterised in that the said faces (37, 40) extend approximately horizontally.

6. An agricultural machine for working the soil in accordance with at least one of the preceding claims, characterised in that the first face (49) of the right angle of the angle bracket (45) extends approximately horizontally and in that the second face (51) of the right angle of the angle bracket (45) extends approximately vertically.

7. An agricultural machine for working the soil in accordance with claim 6, characterised in that the face (38) intended to come into contact with the approximately horizontal first face (49) of the angle bracket (45) is arranged on the corresponding first frame element (25, 26) and in that the face (44) intended to come into contact with the approximately vertical second face (51) of the angle bracket (45) is arranged on the second frame element (27).

8. An agricultural machine for working the soil in accordance with claim 6 or 7, characterised in that the approximately horizontal first face (49) of the angle bracket (45) and/or the corresponding face (38) with which it is intended to come into contact, comprise(s) in their/its central part a recess (52), in such a way that the said faces (49, 38) are not in contact in the region of their central part.

9. An agricultural machine for working the soil in accordance with at least one of the preceding claims, characterised in that for each first frame element (25, 26), the outermost second connecting point (56) extends between the connecting zones of the two shares (3) set up nearest the outside on the said first frame element (25, 26).

## Patentansprüche

1. Landwirtschaftliche Bodenbearbeitungsmaschine (1), die während der Arbeit in einer Vorschubrichtung (16) fortbewegt werden soll und die einen Rahmen (2) aufweist, welcher einerseits einen mit Bodenbearbeitungswerkzeugen (5) versehenen und um seine zumindest im wesentlichen horizontal und quer zur Vorschubrichtung (16) verlaufende Längsachse (15) mittels Antriebsmitteln (17), umfassend insbesonders ein zentrales Gehäuse (19), in Drehung versetzten Rotor (4) trägt, welcher Rahmen (2) anderseits Scharen (3) mittels Schararmen (6) trägt und zwei erste Rahmenelemente (25, 26) umfasst, die sich zumindest im wesentlichen horizontal quer zur Vorschubrichtung (16) und zumindest im wesentlichen in ihrer gegenseitigen Verlängerung erstrecken, und welches zentrale Gehäuse (19) sich zwischen diesen beiden ersten Rahmenelementen (25, 26) befindet, indem es mit diesen mittels Verbindungsorganen (31) lösbar verbunden ist, welcher Rahmen (2) auch ein zweites Rahmenelement (27) umfasst, das ebenfalls zumindest im wesentlichen horizontal quer zur Vorschubrichtung (16) und obendrein im wesentlichen vertikal oberhalb der beiden ersten Rahmenelemente (25, 26) verläuft, indem es mit jedem von ihnen mittels zumindest zweier Verbindungen (55, 56) fest verbunden ist, welcher Rahmen (2) ausserdem zwei untere Kupplungspunkte (11) und einen oberen Kupplungspunkt (12) umfasst, welcher obere Kupplungspunkt (12) mit dem zweiten Rahmenelement (27) verbunden ist, während jedes erste Rahmenelement (25, 26) einen unteren Kupplungspunkt (11) trägt, welcher sich zumindest im wesentlichen in der Nähe einer jeweils ersten Verbindung (55), die das erste Rahmenelement (25, 26) mit dem zweiten Rahmenelement (27) verbindet, befindet, dadurch gekennzeichnet, dass für jedes erste Rahmenelement (25, 26) zumindest eine zweite Verbindung (56) vorgesehen ist, die das erste Rahmenelement (25, 26) mit dem zweiten Rahmenelement (27) verbindet und sich in Richtung nach aussen jenseits der ersten Verbindung (55) befindet, dass die Verbindungen (55, 56) Verbindungselemente (41, 45, 46, 47) aufweisen, die insbesonders Verbindungsschrauben (41, 47, 46) umfassen, welche das zweite Rahmenelement (27) mit den beiden ersten Rahmenelementen (25, 26) lösbar verbinden, dass zumindest an der am weitesten aussen befindlichen zweiten Verbindung (56) jedes ersten Rahmenelements (25, 26) Organe (45, 53, 54) zum Ausgleich von Fertigungstoleranzen der verschiedenen Rahmenelemente (25, 26, 27) vorgesehen sind, die ein Winkelstück (45) umfassen, dessen erste Fläche (49) des rechten Winkels in Kontakt mit einer entsprechenden Fläche (38) des ersten Rahmenelements (25, 26) ist und dessen zweite Fläche (51) des rechten Winkels in Kontakt mit einer entsprechenden Fläche (44) des zweiten Rahmenelements (27) ist, dass in den Kontaktflächen (38, 49) zwischen Winkelstück (45) und erstem Rahmenelement (25, 26) und in den Kontaktflächen (44, 51) zwischen Winkelstück (45) und zweitem Rahmenelement (27) Durchtrittslöcher (53; 54) für die Verbindungsschrauben (47; 46) vorgesehen sind, die die entsprechenden Flächen (38, 49; 44, 51) miteinander verbinden, und dass der Durchmesser der in den Kontaktflächen (38, 49) zwischen Winkelstück (45) und erstem Rahmenelement (25, 26) vorgesehenen Durchtrittslöcher (53) und/oder der in den Kontaktflächen (44, 51) zwischen Winkelstück (45) und zweitem Rahmenelement (27) vorgesehenen Durchtrittslöcher (54) relativ grösser als der Durchmesser der entsprechenden Verbindungsschrauben (47, 46) ist.

2. Bodenbearbeitungsmaschine nach Anspruch 1, dadurch gekennzeichnet, dass das zentrale Gehäuse (19) mittels den Verbindungsorganen (31) starr mit den beiden ersten Rahmenelementen (25, 26) verbunden ist.

3. Landwirtschaftliche Bodenbearbeitungsmaschine nach Anspruch 1 oder 2, dadurch gekennzeichnet, dass die ersten Rahmenelemente (25, 26) und das zweite Rahmenelement (27) zumindest im Bereich der ersten Verbindung (55) jeweils Flächen (37, 40) aufweisen, die direkten Kontakt miteinander haben und die miteinander mittels Verbindungsschrauben (41) verbunden sind.

4. Landwirtschaftliche Bodenbearbeitungsmaschine nach Anspruch 3, dadurch gekennzeichnet, dass zumindest eine der Flächen (37, 40) der ersten Verbindung (55) im Mittelteil einen Absatz (42) aufweist, sodass sie in diesem Mittelteil nicht in Kontakt mit der anderen Fläche ist.

5. Landwirtschaftliche Bodenbearbeitungsmaschine nach Anspruch 3 oder 4, dadurch gekennzeichnet, dass die Flächen (37, 40) im wesentlichen horizontal verlaufen.

6. Landwirtschaftliche Bodenbearbeitungsmaschine nach zumindest einem der vorhergehenden Ansprüche, dadurch gekennzeichnet, dass die erste Fläche (49) des rechten Winkels des Winkelstücks (45) im wesentlichen horizontal verläuft und dass die zweite Fläche (51) des rechten Winkels des Winkelstücks (45) im wesentlichen vertikal verläuft.

7. Landwirtschaftliche Bodenbearbeitungsmaschine nach Anspruch 6, dadurch gekennzeichnet, dass die Fläche (38), die mit der im wesentlichen horizontalen ersten Fläche (49) des Winkelstücks (45) in Kontakt kommen soll, auf dem entsprechenden ersten Rahmenelement (25, 26) angeordnet ist und dass die Fläche (44), die mit der im wesentlichen vertikalen zweiten Fläche (51) des Winkelstücks (45) in Kontakt kommen soll, auf dem zweiten Rahmenelement (27) angeordnet ist.

8. Landwirtschaftliche Bodenbearbeitungsmaschine nach Anspruch 6 oder 7, dadurch gekennzeichnet, dass die im wesentlichen horizontale erste Fläche (49) des Winkelstücks (45) und/oder die entsprechende Fläche (38), mit der sie in Kontakt kommen soll, in ihrem Mittelteil einen Absatz (52) aufweist (aufweisen), sodass die Flächen (49, 38) im Bereich ihres Mittelteils nicht in Kontakt sind.

9. Landwirtschaftliche Bodenbearbeitungsmaschine nach zumindest einem der vorhergehenden Ansprüche, dadurch gekennzeichnet, dass sich die äusserste zweite Verbindung (56) für jedes erste Rahmenelement (25, 26) zwischen den Zonen der Verbindung der beiden am weitesten aussen auf dem ersten Rahmenelement (25, 26) montierten Scharen (3) befindet.
